Europäisches Patentamt

European Patent Office

Office européen des brevets

(11) Numéro de publication : **0 345 894 B1**

# (12) FASCICULE DE BREVET EUROPEEN

(45) Date de publication du fascicule du brevet :
02.11.94 Bulletin 94/44

(51) Int. Cl.⁵ : **H04N 5/16,** H04N 7/167

(21) Numéro de dépôt : **89201433.3**

(22) Date de dépôt : **05.06.89**

(54) **Dispositif de correction d'un signal vidéo.**

(30) Priorité : **10.06.88 FR 8807781**

(43) Date de publication de la demande :
**13.12.89 Bulletin 89/50**

(45) Mention de la délivrance du brevet :
**02.11.94 Bulletin 94/44**

(84) Etats contractants désignés :
**DE FR GB IT**

(56) Documents cités :
**EP-A- 0 242 469**

(73) Titulaire : **PHILIPS ELECTRONIQUE GRAND
PUBLIC
51, Rue Carnot
F-92150 Suresnes (FR)**
(84) **DE FR GB IT**
Titulaire : **N.V. Philips' Gloeilampenfabrieken
Groenewoudseweg 1
NL-5621 BA Eindhoven (NL)**
(84) **DE GB IT**

(72) Inventeur : **Landragin, Jean-Pierre Societe
Civile S.P.I.D.
209, rue de l'Université
F-75007 Paris (FR)**

(74) Mandataire : **Caron, Jean et al
Société Civile S.P.I.D.
156, Boulevard Haussmann
F-75008 Paris (FR)**

## Description

L'invention concerne un dispositif pour corriger un signal vidéo affecté de traînage long, appliqué à une entrée du dispositif, comportant un circuit additionneur à deux entrées pour fournir un signal corrigé en sortie de l'additionneur au moyen de l'addition, d'une part du dit signal vidéo à corriger amené avec sa bande passante complète à la première entrée de l'additionneur et d'autre part d'un signal de correction amené à la seconde entrée de l'additionneur.

Le traînage long, appelé "line tilt" en langue anglaise, est une déformation du signal due à l'ensemble émission-transmission-réception, et notamment due au mauvais réglage de syntonisation des récepteurs, un décalage en fréquence introduisant une déformation du fait de la bande latérale atténuée.

L'effet se manifeste en réception sur les paliers de blanc ou de gris à l'intérieur d'une ligne vidéo, sous forme d'une inclinaison des paliers.

Cet effet est particulièrement gênant dans le cas d'une émission embrouillée par permutation pseudo-aléatoire de segments de ligne, parceque, s'il est introduit dans la chaîne de transmission située entre l'embrouilleur et le désembrouilleur, le traînage se traduit par le fait que les points que l'on accole au décodage de part et d'autre du point de coupure n'ont plus le même niveau de luminance. Le désembrouillage transforme cette distorsion en un "bruit de ligne" réparti dans l'image par le générateur pseudo-aléatoire.

Un dispositif pour la correction de ce défaut trouve donc une application principale dans la réception de la télévision, mais peut aussi être utile dans des applications professionnelles telles que la correction avant émission au niveau de têtes de réseaux cablés.

Il est connu du document "A video scrambler/descrambler concept for the PAL format" by M. CHRISTIANSEN et al, Journal of the Institution of Electronic and Radio Engineers, Vol. 57 n° 1, pp 27-35 January/February 1987, de corriger le traînage long en ajoutant au signal vidéo une dent de scie à fréquence ligne, dont l'amplitude et le signe sont ajustés pour le meilleur résultat.

On a néanmoins constaté que la seule addition d'une dent de scie ne peut corriger tous les types de signaux, notamment parceque la pente des paliers dépend de leur amplitude. Si au lieu de réaliser une addition, on multiplie le signal par une dent de scie, on constate que le procédé ne donne, là encore, de bons résultats que dans des cas particuliers.

L'invention se propose de fournir un dispositif qui donne des résultats améliorés, et qui reste néanmoins très simple à réaliser.

Le dispositif selon l'invention est notamment remarquable en ce que pour engendrer le signal de correction, le dispositif est muni d'un filtre de fréquences à l'entrée duquel est amené le signal vidéo à corriger, et dont la sortie est reliée, via des moyens pour modifier l'amplitude et/ou la polarité du signal de correction, à la deuxième entrée de l'additionneur.

Le dispositif ainsi réalisé corrige correctement tous les signaux rencontrés en pratique, quelle que soit notamment leur amplitude.

Le filtre de fréquences utilisé est avantageusement un filtre passe-bande, dont la fréquence de coupure basse est comprise entre 100 Hz et 20 Hz, et la fréquence de coupure haute entre 20 kHz et 1 Mhz.

En outre il est souhaitable de pouvoir régler l'amplitude du signal de correction pour optimiser la correction. A cet effet les moyens pour modifier l'amplitude et/ou la polarité du signal de correction sont réglables.

L'introduction, dans une voie, d'un filtre dont le signal de sortie est ajouté au moins en partie au signal principal risque de déformer les signaux transitoires, du fait du retard de groupe introduit par ce filtre. Il est avantageux, pour remédier à cet inconvénient, d'insérer un élément de retardement dans le chemin de signal conduisant à la première entrée de l'additionneur.

La description qui va suivre, en regard des dessins annexés décrivant des exemples non limitatifs fera bien comprendre comment l'invention peut être réalisée.

La figure 1 représente divers signaux vidéo pour illustrer l'effet nuisible du traînage lors d'un embrouillage/désembrouillage .

La figure 2 représente divers signaux vidéo pour illustrer différentes méthodes de correction selon l'art antérieur.

La figure 3 représente très schématiquement un dispositif selon l'invention.

La figure 4 est un schéma détaillé d'un mode de réalisation de l'invention.

La figure 5 est un schéma synoptique d'un désembrouilleur muni d'un dispositif selon l'invention.

La figure 6 est un organigramme des opérations pour la détermination de la valeur de réglage à appliquer au dispositif selon l'invention.

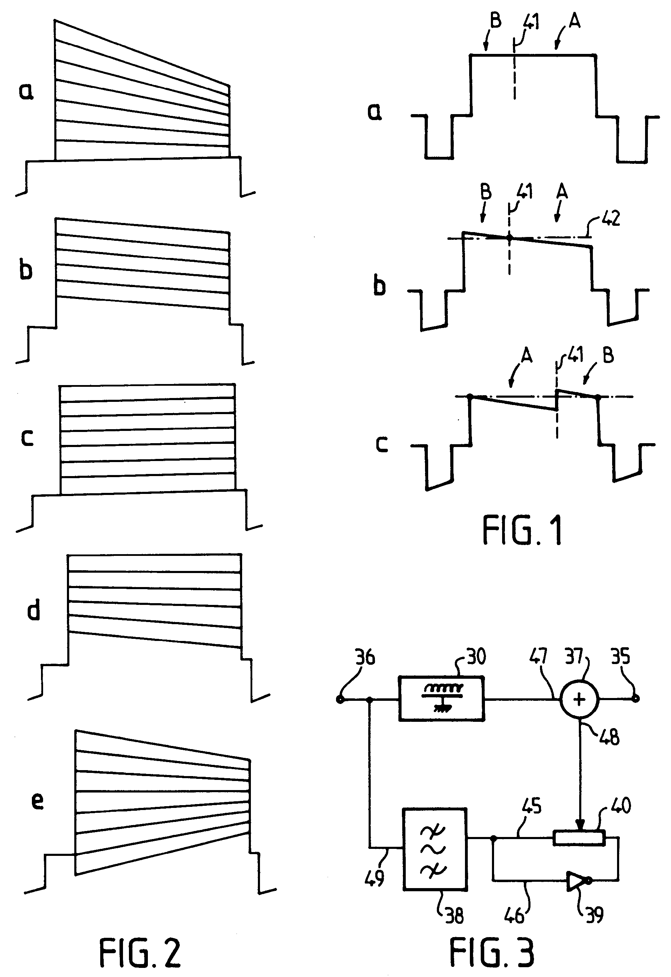

La figure 1-a montre un signal vidéo représentant un niveau de gris constant sur toute une ligne. Ce signal est embrouillé par permutation de parties de ligne, c'est-à-dire que la partie A représente le début de la ligne et la partie B la suite de la ligne. A la réception, ces parties A et B devront donc être interverties, par séparation à l'instant indiqué par la ligne 41.

Sur la figure 1-b, le même signal est représenté après transmission. Il est affecté du défaut de traînage long, qui se manifeste par une pente anormale vis à vis de l'horizontale indiquée par la ligne 42. Après permutation des parties A et B, le signal indiqué en c présente au niveau de la ligne 41 une différence de luminance parasite, qui est visible dans l'image reproduite.

La figure 2 représente différents cas affectés ou non de défauts. Dans chacun des cas on a représenté plusieurs niveaux de gris différents superposés les uns aux autres dans une même ligne. Le signal représenté en c est le signal idéal, soit disponible à l'émission, soit obtenu en réception après correction parfaite. Les signaux "a" et "b" présentent deux défauts typiques. En a l'inclinaison des paliers est proportionnelle à l'amplitude, alors qu'en b l'inclinaison est constante quelle que soit l'amplitude. Si l'on ajoute une dent de scie appropriée au signal "b" on obtient le signal "c". Si l'on multiplie le signal "a" par une dent de scie appropriée on obtient le signal "c" aussi, et dans ces cas particuliers, la correction obtenue est parfaite. Mais si l'on ajoute au signal "a" une dent de scie constante qui correspond à la pente du signal pour une amplitude moyenne, on obtient le signal "e" ; si on multiplie le signal "b" par une dent de scie on obtient le signal "d". Ces deux signaux "e" et "d" ne sont pas corrects. Pour obtenir une bonne correction, il faudrait donc à chaque instant choisir entre la multiplication ou l'addition et en outre adapter l'amplitude de la dent de scie de correction. Il arrive aussi que la pente ne soit pas constante tout le long d'une ligne, auquel cas aucune dent de scie ne peut donner satisfaction.

La figure 3 représente un schéma de principe d'un dispositif selon l'invention qui résout les problèmes exposés ci-dessus. Un signal vidéo affecté de traînage long est fourni sur l'entrée 36. Ce signal est amené avec sa bande passante complète à la première entrée 47 d'un additionneur 37. La deuxième entrée 48 de l'additionneur 37 est reliée à la sortie d'un filtre 38 via des moyens réglables 39, 40, 45, 46 sur lesquels on reviendra plus loin. Le signal d'entrée 36 est amené à l'entrée 49 du filtre 38. Ce dernier est un filtre passe-bande. Le signal corrigé est fourni sur la sortie 35 de l'additionneur 37.

Pour compenser le temps de retard de groupe du filtre 38, une ligne à retard 30 est insérée dans le chemin de signal conduisant à la première entrée 47 de l'additionneur 37. Cet élément de retardement ne doit pas affecter de façon significative le contenu en fréquences du signal vidéo.

Afin de régler l'amplitude et la polarité du signal de correction sortant du filtre 38, des moyens réglables 39, 40, 45, 46 sont prévus entre la sortie du filtre 38 et la deuxième entrée 48 de l'additionneur 37. Ces moyens sont constitués par la séparation de la connexion de sortie du filtre 38 en deux voies 45 et 46, la voie 46 comprenant un élément 39 qui inverse la polarité du signal sans modifier son amplitude ou sa forme. La voie 45 aboutit à une des extrémités de la résistance d'un potentiomètre 40, et la sortie de l'élément 39 est reliée à l'autre extrémité. Ce potentiomètre est un mélangeur réglable dont les deux extrémités de la résistance jouent le rôle de deux entrées de signaux à mélanger. Le curseur du potentiomètre, qui représente la sortie du signal mélangé, est reliée à ladite deuxième entrée 48 du filtre 37.

Lorsque le curseur est à l'extrémité gauche (sur la figure 3) du potentiomètre 40, le signal issu du filtre est appliqué directement à l'entrée 48. Lorsque le curseur est à l'extrémité droite, le signal inversé est appliqué à l'entrée 48, c'est-à-dire que le signal de sortie du filtre 38 est soustrait dans l'additionneur 37 au signal à corriger 36. Dans la position médiane exacte du curseur les signaux inverses l'un de l'autre présentés sur les voies 45 et 46, 39 se retranchent et s'annulent et aucune correction n'est réalisée. Tous les réglages intermédiaires sont possibles. Une méthode pour déterminer le réglage optimal sera décrite plus loin, ainsi qu'un circuit remplissant la fonction du potentiomètre 40, mais susceptible d'être commandé par des signaux électriques.

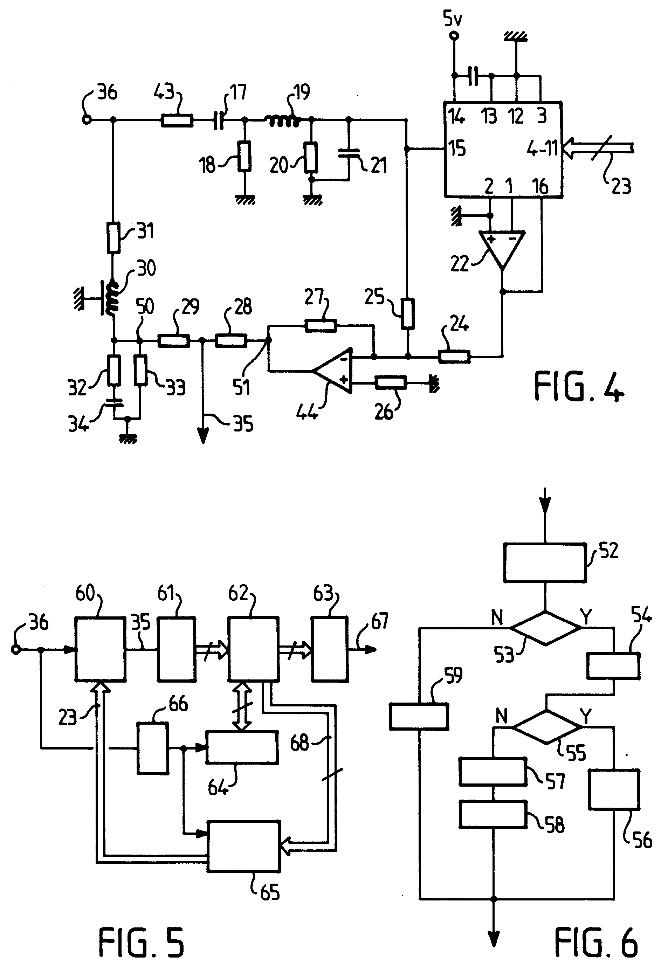

Afin d'éviter une différence entre le signal inversé et le signal direct dûe au passage dans l'inverseur 39 on pourrait aussi prévoir un amplificateur opérationel (non représenté) dans chacune des voies 45 et 46, en amenant le signal sur l'entrée + de l'amplificateur dans une des voies et sur l'entrée - dans l'autre voie. On peut aussi utiliser un multiplieur quatre quadrants disponible en circuit intégré dans le commerce, dont une des entrées est reliée à la sortie du filtre, l'autre entrée est reliée à un générateur de signal de réglage, et dont la sortie est reliée à ladite deuxième entrée de l'additionneur. C'est cette solution qui est utilisée dans le mode de réalisation représenté plus en détail à la figure 4, qui va être décrit maintenant.

Le signal à corriger est amené sur l'entrée 36. A partir de cette entrée une connexion horizontale sur la figure conduit au filtre 17 - 21, et une connexion orientée vers le bas sur la figure conduit au mélangeur 28, 29 sans modification de bande passante.

A partir de l'entrée 36, le pont de résistances 43, 18 avec son pied à la masse constitue à la fois un atténuateur fixe et, grâce au condensateur 17 inséré en série avec la résistance 43, un filtre passe haut d'ordre 1, dont la fréquence de coupure se situe entre 100 Hz et 20 kHz. Avec les valeurs qui seront indiquées plus loin, la fréquence de coupure est ici d'environ 13 kHz. En cascade avec ce filtre 43, 17, 18 est prévu un deuxième filtre 19, 20, 21, constitué d'une self inductance 19 en série, et d'une résistance 20 en parallèle avec un condensateur 21, dont une extrémité est reliée à la masse. Ce filtre est un filtre passe-bas d'ordre deux, dont la fréquence de coupure est située entre 20 kHz et 1 MHz. Avec les valeurs qui seront indiquées plus loin, la fréquence de coupure est ici d'environ 700 kHz. La sortie de ce filtre est branchée sur l'entrée 15 d'un circuit intégré disponible dans le commerce sous le référence TLC7524. Ce circuit est un convertisseur numérique-analogique qui peut remplir la fonction de multiplieur quatre quadrants : l'entrée 15 est prévue pour recevoir un signal analogique, et les entrées 4-11 pour recevoir une valeur numérique à 8 bits amenés par un conducteur multifils 23 ; le circuit réalise la multiplication du signal analogique par la valeur numérique qui peut être positive ou négative, et fournit le résultat sous la forme d'un signal analogique sur la sortie 1. Selon les indications du constructeur cette sortie est amenée sur l'entrée - d'un amplificateur opérationnel 22 dont la sortie est rebouclée sur la borne 16 du circuit intégré. L'alimentation +5V est amenée sur l'entrée 14 et les entrées 3, 12, 13 sont réunies à la masse.

Le signal disponible sur la borne 16 du circuit intégré est mélangé avec le signal d'entrée sur la borne 15 au moyen de deux résistances montées en série entre ces deux bornes. Le point commun de ces deux résistances est amené à l'entrée - d'un amplificateur opérationnel 44 monté classiquement en amplificateur inverseur avec rebouclage pour fixer le gain par une résistance 27, l'entrée + étant reliée à la masse par une résistance 26. Le signal de correction ajusté en amplitude et en polarité est donc finalement disponible à la sortie de l'amplificateur 44 sur la borne 51.

Dans l'autre branche d'entrée (verticale) est insérée la ligne à retard 30 en série avec une résistance d'adaptation 31. Le signal vidéo à corriger est disponible en 50. Un réseau résistances-condensateur 32-34 sert d'adaptateur d'impédance et de correction de bande passante pour la ligne à retard.

L'additionneur est tout simplement constitué par deux résistances 28 et 29 en série entre la borne 50 et la borne 51, le signal corrigé etant enfin disponible en 35, au point milieu des deux résistances 28, 29.

Ce circuit est inséré dans le boitier d'un désembrouilleur associé à un récepteur de télévision, entre la source vidéo démodulée du téléviseur et les circuits de désembrouillage.

La réalisation pratique avec les éléments suivants (figure 4) à donné de bons résultats :

| Résistances : | Condensateurs : |
|---|---|
| 18 : 100Ω | 17 = 10 nF |
| 20 : 100Ω | 21 = 2,2 nF |
| 24 : 15kΩ | 34 = 820 pF |
| 25 : 30kΩ | Self inductance : |
| 26 : 7,5kΩ | 19 = 22μH |
| 27 : ajustable de 30 à 80kΩ | |
| 28 : 100Ω | ampli. opérationnels |
| 29 : 100Ω | 22,44 = 2fois½ LF 353 |
| 31 : ajustable, 220Ω max. | |
| 32 : 820Ω | Ligne à retard : |
| 33 : 82Ω | retard ≈ 0.9μs |
| 43 : 1,1kΩ | inpédance caractéristique ≈150 Ω. |

Une méthode pour choisir la valeur de réglage de la correction va maintenant être décrite. L'entrée de commande d'amplitude du multiplieur étant ici numérique, la détermination de la valeur de correction peut être faite par des moyens numériques.

Selon un avis du CCIR, il existe dans la 17ème ligne un palier horizontal dit "palier de luminance". Dans d'autres standards des paliers équivalents sont toujours présents : l'invention s'applique très avantageusement aussi dans le décodage d'émissions réalisées selon un standard MAC, pour lequel le problème du "line tilt" est particulièrement aigu lorsqu'il y a embrouillage/désembrouillage.

On échantillonne par exemple l'amplitude du signal aux deux extrémités d'un palier de luminance et on traite les valeurs mesurées dans un processeur numérique. Ce dernier peut avantageusement mémoriser plusieurs valeurs et en prendre la moyenne afin notamment de diminuer l'incidence d'échantillons erronés à cause du bruit. Le système procède par asservissement, le processeur calculant la correction qui permet de converger de manière optimale vers une déformation inférieure à une valeur prédéterminée.

Sur la figure 5 qui représente une partie de la voie vidéo d'un récepteur muni d'un désembrouilleur, le signal embrouillé est amené sur la borne 36 et le signal désembrouillé est fourni en sortie sur la borne 67. Ce signal traverse successivement un élément 60 qui contient le circuit de la figure 4 (avec les mêmes références d'entrée/sortie 36, 23, 35), un convertisseur analogique/numérique 61, un circuit de traitement 62, et enfin un convertisseur numérique/analogique 63. Le signal de la borne 36 est également amené à un circuit 66 d'extraction de synchronisation qui fournit les instants de début de retour de ligne et de trame à un circuit de décodage 64 et à un microprocesseur 65. L'élément 62 comporte notamment deux mémoires utilisées tour à tour d'une ligne à l'autre et dont chacune est capable d'enregistrer toutes les données vidéo numérisées d'une ligne, de façon à procéder aux interversions de segments de ligne par modification de la séquence d'adressage des mémoires. L'élément 64 est un circuit d'interface en temps réel qui gère les adresses mémoire plus vite que ne pourrait le faire le microprocesseur 65 qui, de son côté, gère des mots de contrôle à cadence plus lente. L'ensemble de ces éléments 62, 64, 65, 66 sert donc de façon connue au désembrouillage proprement dit, qui ne fait pas partie de l'invention.

Ces mêmes éléments sont également utilisés pour déterminer le réglage optimum de la correction de traînage long. A cet effet, le circuit de décodage 64 est muni d'un compteur de temps qui, à partir des instants de retour de ligne fournis par le séparateur 66, fournit un signal au début et à la fin des paliers de luminance de la ligne test. Ce signal déclenche dans l'élément de traitement 62 le prélèvement de plusieurs échantillons successifs du signal à corriger au début du palier de luminance, et à nouveau plusieurs échantillons successifs à la fin de ce palier. L'élément 62 est muni de mémoires supplémentaires pour enregistrer ces échantillons. Ces derniers sont fournis ensuite via la connexion 68 au microprocesseur 65 qui calcule la moyenne des échantillons du début du palier et celle des échantillons de la fin du palier, et ensuite détermine la pente du palier de luminance à partir de la différence entre les échantillons du début et de la fin du palier. Le processeur calcule alors une correction, qu'il fournit par la connexion 23 à l'élément de correction 60, sous la forme d'un mot, par exemple un mot de 8 bits.

La procédure de calcul du microprocesseur 65 est indiquée sur la figure 6, sous la forme d'un organigramme. Les rectangles symbolisent respectivement les opérations suivantes :

52 : calcul de la moyenne des échantillons sur plusieurs trames.
53 : test de présence du palier de luminance.
   (Y = oui, N = non)
54 : calcul de la pente du palier de luminance.
55 : test de valeur de la pente :
   Y = pente inférieure au seuil fixé
   N = pente supérieure au seuil fixé
56 : correction inchangée
57 : calcul de la nouvelle correction
58 : lissage du résultat du calcul 57.
59 : correction nulle.

Le calcul (opération 52) de la moyenne pour les deux groupes d'échantillons prélevés permet de s'affranchir notamment de l'influence des bruits et fluctuations rapides sur le palier de référence testé.

De la valeur de ces groupes d'échantillons on peut déduire (opération 53) la présence ou l'absence du palier de test. En cas d'absence, on annule purement et simplement la correction (une précaution élémentaire consiste à ne prendre cette mesure qu'après avoir constaté plusieurs fois de suite l'absence de palier de test).

Le lissage (opération 58) consiste à déterminer une moyenne de la correction calculée à un instant déterminé et d'une somme pondérée des corrections précédentes, de façon à éviter une instabilité de la correction.

Le fait de tester dans l'opération 55 si le défaut est inférieur à une valeur prédéterminée et de reconduire, si c'est le cas , la valeur de correction précédente permet d'éviter des oscillations de petite amplitude autour de la valeur idéale.

## Revendications

1. Dispositif pour corriger un signal vidéo affecté de traînage long, appliqué à une entrée (36) du dispositif, comportant un circuit additionneur (37) à deux entrées pour fournir un signal corrigé en sortie (35) de l'additionneur au moyen de l'addition, d'une part du dit signal vidéo à corriger amené avec sa bande passante complète à la première entrée (47) de l'additionneur et d'autre part d'un signal de correction amené à la seconde entrée (48) de l'additionneur, caractérisé en ce que pour engendrer le signal de correction, le dispositif est muni d'un filtre de fréquences (38) à l'entrée (49) duquel est amené le signal vidéo à corriger, et dont la sortie est reliée, via des moyens (40,27) pour modifier l'amplitude et/ou la polarité du signal de correction, à la deuxième entrée (48) de l'additionneur.

2. Dispositif selon la revendication 1, caractérisé en ce que le filtre (38) est un filtre passe-bande.

3. Dispositif selon la revendication 2, caractérisé en ce que le filtre (38) est fait d'un filtre passe-bas (19-21) et d'un filtre passe haut (17,18), montés en cascade.

4. Dispositif selon la revendication 2, caractérisé en ce que la fréquence de coupure inférieure du filtre est comprise entre 100Hz et 20kHz.

5. Dispositif selon la revendication 2, caractérisé en ce que la fréquence de coupure supérieure du filtre est comprise entre 20kHz et 1MHz.

6. Dispositif selon l'une quelconque des revendications 1 à 5, caractérisé en ce qu'il comporte un élément de retardement (30) dans le chemin de signal conduisant de l'entrée du dispositif (36) à la première entrée (47) de l'additionneur.

7. Dispositif selon l'une quelconque des revendications 1 à 6, caractérisé en ce que les moyens (40,27) pour modifier l'amplitude et/ou la polarité du signal de correction sont réglables.

8. Dispositif selon la revendication 7, caractérisé en ce que lesdits moyens (40,27) réglables sont constitués par la séparation de la connexion de sortie du filtre en deux voies (45,46) dont l'une comprend un élément inverseur(39), ces deux voies conduisant chacune à une des deux entrées d'un mélangeur réglable (40) dont la sortie de signal mélangé est reliée à ladite deuxième entrée (48) de l'additionneur.

9. Dispositif selon la revendication 7, caractérisé en ce que lesdits moyens (40,27) réglables sont constitués par un multiplieur "quatre quadrants" dont une des entrées (15) est reliée à la sortie du filtre, l'autre entrée (4-11) est reliée à un générateur de signal de réglage, et dont la sortie (16) est reliée à ladite deuxième entrée (51) de l'additionneur.

10. Dispositif selon l'une quelconque des revendications 7 à 9, caractérisé en ce qu'il comporte un processeur numérique (65), lequel est utilisé pour la détermination de la valeur de réglage des moyens (40,27) réglables, ce processeur numérique étant chargé d'un logiciel qui, sur la base d'un palier de luminance d'une ligne test, commande les opérations suivantes : prélèvement de plusieurs échantillons successifs du signal à corriger au début du palier de luminance, et à nouveau de plusieurs échantillons successifs à la fin de ce palier, calcul de la moyenne des échantillons sur plusieurs trames (52), test de présence du palier de luminance (53), calcul et test de valeur de la pente (54,55), puis calcul de la nouvelle correction (57) permettant de converger de manière optimale vers une déformation inférieure à une valeur prédéterminée.

## Patentansprüche

1. Einrichtung zur Korrektur eines einem Eingang (36) der Einrichtung zugeführten, durch Sägezahnsignale beeinträchtigten Videosignals mit einer Additionsschaltung (37) mit zwei Eingängen, die an ihrem Ausgang (35) ein korrigiertes Signal liefert, das durch Addition einerseits des zu korrigierenden Videosignals, das dem ersten Eingang (47) des Addierers mit seiner gesamten übertragenen Bandbreite zugeführt wurde, und andererseits eines dem zweiten Eingang (48) des Addierers zugeführten Korrektursignals erhalten wurde, dadurch gekennzeichnet, daß sie für die Erzeugung des Korrektursignals mit einem Frequenzfilter (38) ausgestattet ist, dessen Eingang (49) das zu korrigierende Videosignal zugeführt wird und dessen Ausgang über Mittel (40, 27) zur Veränderung der Amplitude und/oder der Polarität des Korrektursignals mit dem zweiten Eingang (48) des Addierers verbunden ist.

2. Einrichtung nach Anspruch 1, dadurch gekennzeichnet, daß das Filter (38) ein Bandpaßfilter ist.

3. Einrichtung nach Anspruch 2, dadurch gekennzeichnet, daß das Filter (38) aus einem Tiefpaßfilter (19-21) und einem Hochpaßfilter (17,18) besteht, die in Kaskade geschaltet sind.

4. Einrichtung nach Anspruch 2, dadurch gekennzeichnet, daß die untere Grenzfrequenz des Filters zwischen 100 Hz und 20 kHz liegt.

5. Einrichtung nach Anspruch 2, dadurch gekennzeichnet, daß die obere Grenzfrequenz des Filters zwischen 20 kHz und 1 MHz liegt.

6. Einrichtung nach einem der Ansprüche 1 bis 5, dadurch gekennzeichnet, daß sie ein Verzögerungselement (30) in dem vom Eingang der Einrichtung (36) zum ersten Eingang (47) des Addierers führenden Signalweg enthält.

7. Einrichtung nach einem der Ansprüche 1 bis 6, dadurch gekennzeichnet, daß die Mittel (40, 27) zur Veränderung der Amplitude und/oder der Polarität des Korrektursignals regelbar sind.

8. Einrichtung nach Anspruch 7, dadurch gekennzeichnet, daß die regelbaren Mittel (40, 27) darin bestehen, daß der Ausgangsanschluß des Filters in zwei Leitungen (45,46) unterteilt ist, deren eine ein Umkehrelement (39) umfaßt, wobei die beiden Leitungen jeweils zu einem der beiden Eingänge eines regelbaren Mischers (40) führen, dessen Mischsignal-Ausgang mit dem zweiten Eingang (48) des Addierers verbunden ist.

9. Einrichtung nach Anspruch 7, dadurch gekennzeichnet, daß die regelbaren Mittel (40, 27) aus einem "Vier-Quadrant"-Vervielfacher bestehen, dessen einer Eingang (15) mit einem Ausgang des Filters, dessen anderer Eingang (4-11) mit einem Regelsignalgenerator und dessen Ausgang (16) mit dem zweiten Eingang (51) des Addierers verbunden ist.

10. Einrichtung nach einem der Ansprüche 7 bis 9, dadurch gekennzeichnet, daß sie einen digitalen Prozessor (65) zur Ermittlung des Regelwerts der regelbaren Mittel (40, 27) umfaßt, wobei der digitale Prozessor mit einer Software geladen ist, die ausgehend von einer Leuchtdichte-Schulter einer Testzeile die folgenden Operationen steuert: Abfrage mehrerer aufeinanderfolgender Abfragewerte des zu korrigierenden Signals am Beginn der Leuchtdichte-Schulter und nochmals mehrerer aufeinanderfolgender Abfragewerte am Ende der Schulter, Berechnung des Mittelwerts der Abfragewerte an mehreren Halbbildern (52), Prüfung auf Anwesenheit der Leuchtdichte-Schulter, Berechnung und Prüfung des Betrages der Schräge (54, 55) und anschließend Berechnung der neuen Korrektur (57), um damit eine optimale Annäherung an eine unterhalb eines vorbestimmten Wertes liegende Verzerrung zu erreichen.

## Claims

1. A device for correcting a video signal] affected by line tilt, and applied to an input (36) of the device, including an adder circuit (37) having two inputs for supplying a signal corrected at the output (35) of the adder by adding said video signal to be corrected and applied with its total passband to the first input (47) of the adder and a correction signal applied to the second input (48) of the adder, characterized in that, for generating the correction signal, the device is provided with a frequency filter (38) whose input (49) receives the video signal to be corrected and whose output is connected to the second input (48) of the adder via means (40, 27) for modifying the amplitude and/or the polarity of the correction signal.

2. A device as claimed in Claim 1, characterized in that the filter (38) is a bandpass filter.

3. A device as claimed in Claim 2, characterized in that the filter (38) is formed by the cascade arrangement of a low-pass filter (19-21) and a high-pass filter (17, 18).

4. A device as claimed in Claim 2, characterized in that the lower cut-off frequency of the filter is between 100 Hz and 20 kHz.

5. A device as claimed in Claim 2, characterized in that the upper cut-off frequency of the filter is between 20 kHz and 1 MHz.

6. A device as claimed in any one of Claims 1 to 5, characterized in that it includes a delay element (30) provided in the signal path leading from the input of the device (36) to the first input (47) of the adder.

7. A device as claimed in any one of Claims 1 to 6, characterized in that the means (40, 27) for modifying

7

the amplitude and/or the polarity of the correction signal are controllable.

8. A device as claimed in Claim 7, characterized in that said controllable means (40, 27) are constituted by the separation of the output coupling of the filter into two channels (45, 46) one of which comprises an inverting element (39), these two channels each leading to one of two inputs of a controllable mixer (40) whose mixed signal output is coupled to said second input (48) of the adder.

9. A device as claimed in Claim 7, characterized in that said controllable means (40, 27) are constituted by a four-quadrant multiplier which has one of its inputs (15) coupled to the output of the filter, the other input (4-11) to a control signal generator and its output (16) to said second input (51) of the adder.

10. A device as claimed in any one of Claims 7 to 9, characterized in that it includes a digital processor (65) which is used for determinating the control value of the controllable means (40, 27) this digital processor being loaded with software which, on the basis of a luminance plateau of a test line takes controls the following operations: taking several consecutive samples of the signal to be corrected at the beginning of the luminance plateau, and again several consecutive samples at the end of this plateau, the calculating (52) the average of the samples over a plurality of fields, a luminance plateau presence test (53), calculating and testing (54, 55) the value of the slope and thereafter calculating (57) the new correction which permits converging an optimum manner towards a deformation less than a predetermined value.

FIG. 1

FIG. 2

FIG. 3

FIG. 4

FIG. 5

FIG. 6